# EUROPEAN PATENT APPLICATION

(11) **EP 4 112 462 A1**
(43) Date of publication of application: **04.01.2023**
(21) Application number: 21193721.4
(22) Date of filing: 30.08.2021
(51) Int. Cl.: B64D 11/00, B64D 25/00

(54) **SECURITY SYSTEM FOR AIRCRAFT HAND LUGGAGE COMPARTMENTS**

(30) Priority: 01.07.2021 ES 202130617
(71) Applicant: BSP2019 Aeronáutica S.L., 35100 Las Marinas, Bartolomé deTirajana (ES)
(72) Inventor: MASDEU CANO, Luis Eduardo, 29003 Málaga (ES); ROSA Burillo, Adrián, 35006 Las Palmas de Gran Canaria (ES); ORTEGA ZAMORANO, Francisco, 29620 Torremolinos (ES); VALDERRAMA ARQUERO, Alejandro, 29007 Málaga (ES); GIL MERINO, Oscar, 35100 Las Marinas Bartolomé de Tirajana (ES); ARTILES ORTEGA, Nayra, 35100 Las Marinas Bartolomé de Tirajana (ES)
(74) Representative: López Camba, Emilia

(57) **Abstract**

The object of the present invention is a security system for aircraft hand luggage compartments, which enables the opening and closing control of aircraft hand luggage compartments, jointly or individually, primarily to avoid any attempt of their opening by passengers to achieve a quick evacuation when circumstances require it.

The present invention is characterized by the special configuration, design and functionality of each and every one of the elements that define the system so that, acting together, make it possible to obtain a system that can be activated in emergency situations and/or when the personnel in charge of the aircraft so demands it, having been designed for this purpose an opening and closing system of each compartment, selectable individually or jointly, for special situations.

Therefore, the present invention is circumscribed within the civil aeronautical industry sector, particularly focused on the field of security systems.

## Description

The object of the present invention is a security system for aircraft hand luggage compartments, which enables the opening and closing control of aircraft hand luggage compartments, jointly or individually, primarily to avoid any attempt of their opening by passengers to achieve a quick evacuation when circumstances require it.

The present invention is characterized by the special configuration, design and functionality of each and every one of the elements that define the system so that, acting together, make it possible to obtain a system that can be activated in emergency situations and/or when the personnel in charge of the aircraft so demands it, having been designed for this purpose an opening and closing system of each compartment, selectable individually or jointly, for special situations.

Therefore, the present invention is circumscribed within the civil aeronautical industry sector, particularly focused on the field of security systems.

### BACKGROUND OF THE INVENTION

The European standards for the certification of aircrafts indicate, regarding emergency evacuations, that "For aeroplanes having a seating capacity of more than 44 passengers, it must be shown that, in its maximum seating capacity configuration, all passengers and members of the crew can be evacuated within a maximum of 90 seconds".

At present, any aeronautical company issues or provides safety messages where different guidelines, to follow in emergency circumstances, are explained to passengers. Said messages warn that, in case of emergency, it is not possible to access to the luggage stored in overhead compartments and that, in case of evacuating the craft, the passenger must proceed to evacuate the aircraft without said luggage. But as can be seen in any commercial aircraft, there is no security element blocking or preventing access to the luggage compartment and just a security message is not enough for people to follow the instructions and even less to evacuate a plane in less than 90 seconds.

Studies have found that passengers often pause to retrieve hand luggage during an emergency evacuation, despite instructions to the contrary in pre-flight safety briefings. This is not a new phenomenon, as it was observed in Calgary during the evacuation of a Boeing 737 that caught fire in 1984 where 5 people were seriously injured. Or in a Boeing 777 crash in 2008 at Heathrow airport where a passenger returned to the airplane to retrieve personal belongings. Or more clearly in the evacuation video of a Sukhoi Superjet that caught fire upon landing in 2019, clearly showing passengers on the emergency slides with large suitcases, which raises questions about whether this contributed to the increase in the loss of life.

For all these reasons, a simple safety message is clearly not enough to prevent a passenger, in a emergency moment, from taking their belongings located in the upper hand luggage compartment and therefore evacuate in less than 90 seconds, so a system was designed that not only prevents the opening of hand luggage compartments, but also discourages from doing so, by preventing or showing the impossibility of opening hand luggage compartments.

On the other hand, it should be noted that, after a search made by the applicant, no other security device for aircraft hand luggage compartments has been found, nor any other invention for a similar application, presenting equal or similar technical and constitutive characteristics to those claimed in the present specification.

Therefore, the object of the present invention is to develop a security system that allows the opening and closing of aircraft hand luggage compartments according to security guidelines, depending on different emergency levels, where the security system has the characteristics that will be shown below, and which are set out essentially in the first claim.

### DETAILED DESCRIPTION OF THE INVENTION

The object of the invention is a system which enables the opening and closing of aircraft hand luggage compartments, either individually or jointly, according to different levels of security.

The security system comprises a control unit (CU) in charge of sending the opening and closing signal to electromechanical locks installed in each aircraft hand luggage compartment.

Said signal for opening or closing hand luggage compartments may be a signal directed to a specific hand luggage compartment or it may be a joint signal sent to all hand luggage compartments, allowing simultaneous control of all hand luggage compartments.

Electromechanical locks installed in each hand luggage compartment have a unique serial number that allows them to be addressed individually, allowing individual opening and closing of each hand luggage compartment depending on the needs that crew deems appropriate or, jointly, activating all at the same time whenever an emergency requires it.

In addition, a process is started in parallel by which opening handles of electromechanical locks of each hand luggage compartment are locked so that passengers will not even intend to open hand luggage compartments.

The control system can receive opening and closing commands from both the cockpit and a man-machine interface, which, in a possible non-limiting embodiment, can be a touch screen controlled by cabin crew.

The control unit has a direct current supply that can be the same as the one used in the rest of the electronic elements of the airplane.

Input signals of control unit will be those that are already used in the rest of the airplane, in order not to add actions carried out by pilots nor the need of accessing to the control unit of each airplane. For all these reasons, signals such as "seat belts", "landing gear", "pressurization", "emergency lights", etc. are used to cover the largest number of scenarios to be configured.

These signals will be input to UC and, depending on which signals are active, different scenarios will appear where different actions will be carried out. For example:
- Scenario 0 in which all compartments are open,
- Scenario 1 in which all compartments are closed, but flight attendants can open a specific one if they need to access to a specific hand luggage compartment,
- Scenario 2 all compartments are closed and cannot be opened.

Different scenarios can be programmed depending on input signals and the requirements of the aviation authorities.

In addition, the control unit will receive input data from the touch screen where flight attendants can also have access to control unit to open or close all luggage compartments, either jointly or individually. Thus, in the event of a specific emergency, where a passenger urgently needs to have access to an object stored in his hand luggage compartment for justified reasons, cabin crew can perform an opening to said compartment from the man-machine interface. Or in another circumstance, where crew considers it appropriate to close or open hand luggage compartments in a general way for any event, cabin crew can also do it from the man-machine interface without intervention of pilots.

Thanks to the characteristics of the system, it is possible not only to prevent passengers from accessing their luggage in an emergency, but also passengers will not even intend to open hand luggage compartments, to avoid accidents involving passengers or to achieve a maximum speed in the event of a possible evacuation of the aircraft. For this reason, a mechanism has been designed by which the opening handles of hand luggage compartments are physically and visually blocked for passengers. For such purpose, three options can be materialized:
a) A mechanism closes the handle so that a hand cannot be inserted.
b) The handle is hidden in the hand luggage compartment door so that it is not accessible.
c) If a mechanical action on the handle is not possible due to the design of the luggage compartment, either because the handle cannot move or because it is a push button, a light signal will be incorporated (a red LED light) to indicate that the opening system will not operate.

Accordingly, thanks to the security system, it is possible to prevent and discourage passengers from any attempt to access luggage compartments of aircrafts in an emergency, achieving the evacuation of the aircraft in less than 90 seconds, as established by the regulations.

Unless otherwise indicated, all technical and scientific elements used herein have the meanings commonly understood by an ordinary person skilled in the art to which this invention pertains. Similar or equivalent methods and materials to those described in the present specification can be used when putting the present invention into practice.

Throughout this description and claims, the word "comprises" and its variants are not intended to exclude other technical characteristics, additions, components or steps. For those skilled in the art, other objects, advantages, and characteristics of the invention will emerge partly from the description and partly when putting the present invention into practice.

### BRIEF DESCRIPTION OF THE DRAWINGS

To complement the description and for a better understanding of the characteristics of the invention, a set of drawings is attached as an integral part of this description, where, with an illustrative and non-limiting nature, the following has been represented:
Figure 1 shows a representation of the electrical connection diagram of the system object of the invention.
Figure 2 shows a basic example of a hand luggage compartment in a closed state (a) and in an open state (b).
Figure 3 shows a representation of different parts of the electronic lock.
Figures 4, 5 and 6 are different implementations of the handle locking mechanism of the luggage compartment

### PREFERRED EMBODIMENT OF THE INVENTION

In view of the figures, a preferred embodiment of the proposed invention is described below.

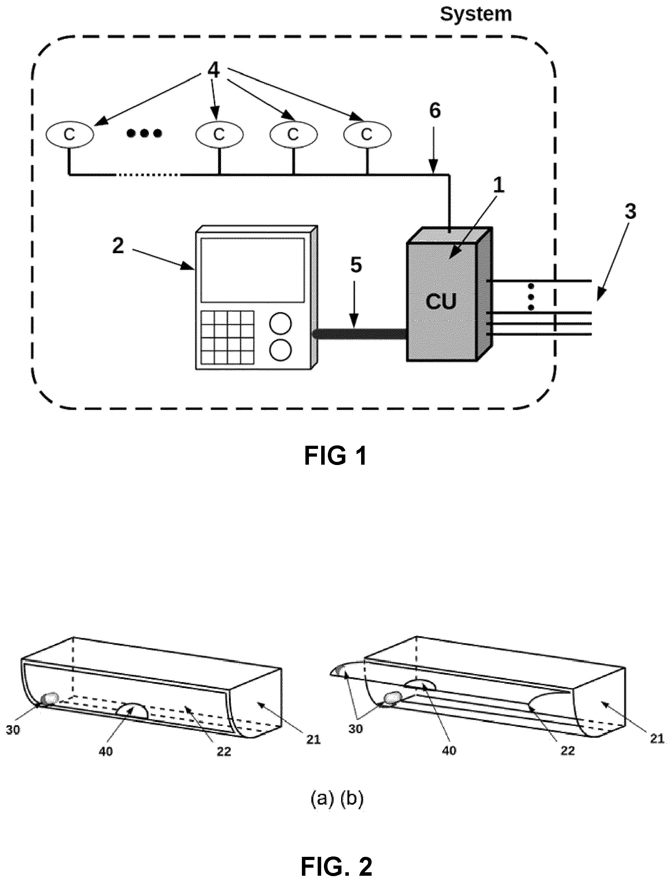

Figure 1 shows the security system for aircraft hand luggage compartments comprising:
- A control unit (1), which manages whole security system, that can be the same as the aircraft's control unit itself or an independent control unit.
- A touch screen (2), as a preferred but non-limiting embodiment, being able to be a man-machine interface that is in connection with the control unit (1) through a data bus (5) with preferably serial communication protocol and where said interface serves for the introduction of information operated by cabin crew.
- A series of luggage compartments (21) each provided with a locking system (30) and a lockable handle (40) to manipulate the hand luggage compartment lid, where opening and closing of hand luggage compartments is controlled either individually or jointly.
- A communication bus (6) transmitting commands from control unit to each lock of each hand luggage compartment.

The man-machine interface, allowing input of information data by flight attendants, can be a touch screen (2) in a possible preferred, although in no way limiting, embodiment.

Control unit (1) can process all information coming either from a communication line (3), coming from the cockpit, or from a data bus (5) connected to touch screen (2) and can control opening and/or closing of all hand luggage compartments, depending on different scenarios.

Figure 2 shows an example of a generic hand luggage compartment (21), the system being conformable to any model. It can be seen both the closed state in Fig. 2 (a) and the open state in Fig. 2 (b) where each hand luggage compartment has a locking system (30) and a handle (40) to manipulate the hand luggage compartment lid.

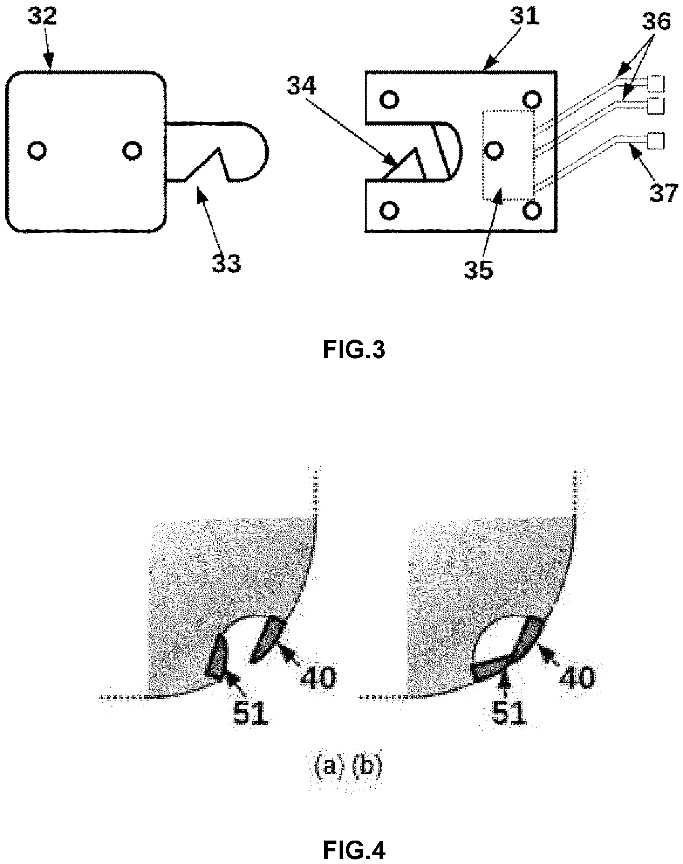

Figure 3 shows the locking system (30) of the hand luggage compartment comprising a base component (31) fixed to hand luggage compartment (21) and a hitch component (32) fixed to door (22). Base component (31) is made up of a small electromechanical lock (35) which will be triggered depending on the address sent by means of the signal on data address bus (37), and it will also be supplied with a direct current (36) obtained from aircraft electronics. This proposed lock will move the latch (34) of the lock that remains embedded in the strike (33) of the hitch component (32) by pressure.

Figures 4, 5 and 6 show different embodiments of locking of handles (40):
- Figure 4 shows first option for locking handle (40), in this option the handle is covered with a sheet (51) so that people do not have access to the hole in the handle. Fig. 4 (a) shows a hand luggage compartment position where the hand luggage compartment door can be opened, while in Fig. 4 (b) the hand luggage compartment door cannot be opened.

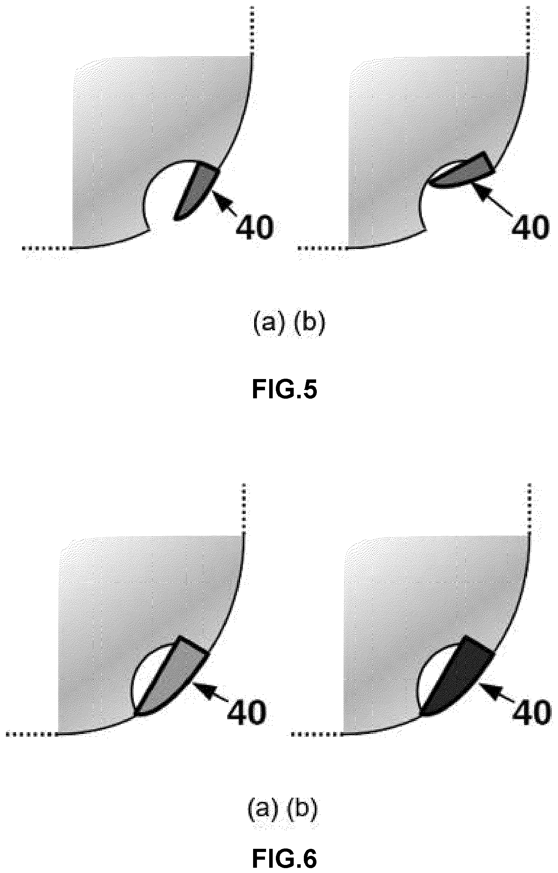

- Figure 5 shows the second option for locking handle (40), in this option handle (40) itself is hidden in the hand luggage compartment door itself, so that passengers cannot grab the handle. Fig. 5 (a) shows the hand luggage compartment position in which the hand luggage compartment door can be opened while in Fig. 5 (b), the luggage compartment door cannot be opened.
- Figure 6 shows the third option for locking handle (40), in this option the handle is lit up depending on the state of the hand luggage compartment, in order to make passengers aware in advance of the possibility of opening. Fig. 6 (a) shows the compartment position in which the compartment door can be opened, while in Fig. 6 (b) the compartment door cannot be opened.

In a more specific embodiment, control unit (1) is implemented by an open-source microcontroller, such as the Arduino, that receives signals coming from the cockpit like "seat belts", "landing gear", "pressurization", "emergency lights", etc. These signals are input to microcontroller in digital signal reading ports to check their status (Active/Not active) and a series of scenarios or emergency levels are programmed depending on the state of signals. These scenarios can be programmed according to the aeronautical regulations with classical logic or by means of a machine learning system, such as neural networks so that the system automatically learns possible scenarios and makes autonomous decisions. At level 0 all compartments are open. At level 1 all compartments are closed, but flight attendants can open a luggage compartment individually if the situation requires it. At level 2, luggage compartments cannot be accessed under any circumstances while this level of emergency continues.

In addition to the input signals, control unit communicates with the man-machine interface, which can be implemented by means of a digital touch screen (Tablet) embedded in that part of the aircraft reserved to flight attendants, installing in said interface a software where each of the compartments appears in green or red depending on whether they are open or closed, as well as a general button that closes all the compartments. Said interface will communicate with control unit through the USB port with a serial communication because the amount of information that needs to be transmitted is not very high. The man-machine interface will communicate the control unit when a flight attendant wishes to open or close a certain compartment or all at the same time, while graphically showing the status of all the electromechanical locks. Control unit also manages opening of the locks of each hand luggage compartment through address bus (6), which uses an 12C communication protocol where each element connected to the bus will have a unique address to individually communicate with each electromechanical lock.

Once the nature of the present invention has been sufficiently described, as well as how to put it into practice, it is stated that, within its essentiality, it may be carried out by other embodiments that differ in detail from the one indicated as an example and that will fall within the scope of protection of the present patent, provided that they do not alter, change or modify its fundamental principle.

## Claims

1. Security system for aircraft hand luggage compartments that allows an emergency evacuation of aircrafts, **characterized in that** it comprises:
- A control unit (1), which manages the entire security system,
- A man-machine interface in connection with the control unit (1) through a data bus (5) and where said interface serves for the input of information operated by flight attendants.
- A series of hand luggage compartments (21) each provided with a locking system (30) and a lockable handle (40) to manipulate the hand luggage compartment lid, where the opening and closing of hand luggage compartments is controlled either individually or jointly.
- A communication bus (6) that transmits orders from control unit (1) to each lock of each hand luggage compartment (21),
where control unit (1) can process all information coming either from a communication line (3), coming from the cockpit, or from data bus (5) connected to the man-machine interface and can control the opening and/or closing of all hand luggage compartments, either individually or jointly, depending on different scenarios.

2. Security system for aircraft hand luggage compartments according to claim 1, **characterized in that** locking system (30) of each hand luggage compartment comprises a base component (31) that is fixed to the hand luggage compartment (21), and a hitch component (32) that is fixed to a door (22) of the hand luggage compartment, where base component (31) is made up of a small electromechanical lock (35) which will be triggered depending on the address sent by means of the signal on the data address bus (37), and it will be supplied with a direct current (36) obtained from aircraft electronics and where said lock will move a latch (34) of the lock that remains embedded in the strike (33) of the hitch component (32) by pressure.

3. Security system for aircraft hand luggage compartments according to claim 1 or 2, **characterized in that** the locking of handle (40) is carried out by means of a sheet (51) that covers the access to handle (40).

4. Security system for aircraft luggage compartments according to claim 1 or 2, **characterized in that** the locking of handle (40) is carried out by means of retraction of handle (40) itself on the hand luggage compartment door itself.

5. Security system for aircraft luggage compartments according to claim 1 or 2, **characterized in that** the locking of handle (40) is carried out by means of lighting up depending on the state of the hand luggage compartment, in order to make passengers aware in advance of the possibility of opening.

6. Security system for aircraft luggage compartments according to any of the preceding claims, **characterized in that** the man-machine interface is a touch screen (2).

## Amended claims

### Amended claims in accordance with Rule 137(2) EPC.

1. Security system for aircraft hand luggage compartments that allows an emergency evacuation of aircrafts, **characterized in that** it comprises:
- A control unit (1), which manages the entire security system,
- A man-machine interface in connection with the control unit (1) through a data bus (5) and where said interface serves for the input of information operated by flight attendants.
- A series of hand luggage compartments (21) each provided with a locking system (30) and a lockable handle (40) to manipulate the hand luggage compartment lid, where the opening and closing of hand luggage compartments is controlled either individually or jointly.
- A communication bus (6) that transmits orders from control unit (1) to each lock of each hand luggage compartment (21),
where control unit (1) can process all information coming either from a communication line (3), coming from the cockpit, or from data bus (5) connected to the man-machine interface and can control the opening and/or closing of all hand luggage compartments, either individually or jointly, depending on different scenarios, **characterized in that**
the locking of handle (40) is carried out by means of a sheet (51) that covers the access to handle (40) or by means of retraction of handle (40) itself on the hand luggage compartment door itself.

2. Security system for aircraft hand luggage compartments according to claim 1, **characterized in that** locking system (30) of each hand luggage compartment comprises a base component (31) that is fixed to the hand luggage compartment (21), and a hitch component (32) that is fixed to a door (22) of the hand luggage compartment, where base component (31) is made up of a small electromechanical lock (35) which will be triggered depending on the address sent by means of the signal on the data address bus (37), and it will be supplied with a direct current (36) obtained from aircraft electronics and where said lock will move a latch (34) of the lock that remains embedded in the strike (33) of the hitch component (32) by pressure.

3. Security system for aircraft luggage compartments according to claim 1 or 2, **characterized in that** the locking of handle (40) is carried out by means of lighting up depending on the state of the hand luggage compartment, in order to make passengers aware in advance of the possibility of opening.

4. Security system for aircraft luggage compartments according to any of the preceding claims, **characterized in that** the man-machine interface is a touch screen (2).
